# EUROPEAN PATENT APPLICATION

(11) **EP 4 471 902 A1**
(43) Date of publication of application: **04.12.2024**
(21) Application number: 22957630.1
(22) Date of filing: 05.09.2022
(51) Int. Cl.: H01M 4/505, H01M 4/525, H01M 4/58

(54) **POSITIVE ELECTRODE ACTIVE MATERIAL PRECURSOR, POSITIVE ELECTRODE ACTIVE MATERIAL, PREPARATION METHOD AND SECONDARY BATTERY**

(71) Applicant: Contemporary Amperex Technology (Hong Kong) Limited, Central, Central And Western District (HK)
(72) Inventor: LIU, Shaojun, Ningde City, Fujian 352100 (CN); ZHAN, Wenwei, Ningde City, Fujian 352100 (CN); ZHANG, Xinxin, Ningde City, Fujian 352100 (CN); OUYANG, Chuying, Ningde City, Fujian 352100 (CN); LI, Qingzheng, Ningde City, Fujian 352100 (CN)
(74) Representative: Kraus & Lederer PartGmbB
(86) International application number: PCT/CN2022/116953
(87) International publication number: WO 2024/050654

(57) **Abstract**

The present application provides a positive electrode active material precursor, a positive electrode active material, a preparation method, and a secondary battery. The preparation method includes the following steps: S1, preparing an aqueous solution of a metal salt and an aqueous solution of a precipitant, where the precipitant includes one or more selected from oxalic acid and a water-soluble oxalate; S2, mixing the aqueous solution of the precipitant and the aqueous solution of the metal salt at a shear speed of 10000 r/min or more for co-precipitation reaction; and S3, after the reaction is completed, obtaining the positive electrode active material precursor via washing and drying. The preparation method can provide a positive electrode active material precursor with regular morphology, small particle size, narrow particle size distribution, single crystal phase, high purity, uniform element distribution, and high batch stability and consistency, thereby improving electrochemical performance of positive electrode active materials and secondary batteries.

## Description

### TECHNICAL FIELD

The present application belongs to the field of battery technology, and specifically relates to a positive electrode active material precursor, a positive electrode active material, a preparation method, and a secondary battery.

### BACKGROUND

In recent years, secondary batteries have been widely used in energy storage power systems such as hydropower, firepower, wind power, and solar power plants, and in various fields such as electric tools, electric bicycles, electric motorcycles, electric vehicles, military equipment, aerospace, and the like. Positive electrode active materials are one of the key factors affecting electrochemical performance of secondary batteries, and positive electrode active material precursors, such as commonly used oxalate precursors, are also one of the key factors affecting performance of the positive electrode active materials. However, the oxalate precursors currently prepared have defects such as irregular morphology, large particle size, wide particle size distribution, and poor batch stability and consistency, which affect the electrochemical performance of the positive electrode active materials and the secondary batteries.

### SUMMARY

The objective of the present application is to provide a positive electrode active material precursor, a positive electrode active material, a preparation method, and a secondary battery, aiming to providing a positive electrode active material precursor with regular morphology, small particle size, narrow particle size distribution, single crystal phase, high purity, uniform element distribution, and high batch stability and consistency, thereby improving the electrochemical performance of positive electrode active materials and secondary batteries.

A first aspect of the present application provides a method for preparing a positive electrode active material precursor, comprising the following steps: S1, preparing an aqueous solution of a metal salt and an aqueous solution of a precipitant, where the precipitant comprises one or more selected from oxalic acid and a water-soluble oxalate; S2, mixing the aqueous solution of the precipitant and the aqueous solution of the metal salt at a shear speed of 10000 r/min or more for co-precipitation reaction; and S3, after the reaction is completed, obtaining the positive electrode active material precursor via washing and drying.

The inventors of the present application unexpectedly discovered in research that, when the aqueous solution of the precipitant is mixed with the aqueous solution of the metal salt in a high-speed dispersion homogenizer at a shear speed of 10000 r/min or more for co-precipitation reaction, it can not only further improve production efficiency of the positive electrode active material precursor, but also can endow the positive electrode active material precursor with regular morphology, small particle size, narrow particle size distribution, single crystal phase, high purity, uniform element distribution, and high batch stability and consistency. The preparation method provided by the present application further has the advantages of simple process, high production efficiency, and easy scale-up for industrial production. The preparation method provided by the present application can further achieve low-cost and green production, with high industrial value. The preparation method provided by the present application can further help to accurately control the particle size of the positive electrode active material precursor.

In some embodiments of the present application, in S2, the co-precipitation reaction is carried out in a high-speed dispersion homogenizer.

In some embodiments of the present application, in S2, the shear speed is 10000 r/min-28000 r/min. By controlling the shear speed, positive electrode active material precursors with different particle sizes can be obtained. Therefore, the preparation method provided by the present application also helps to accurately control the particle size of the positive electrode active material precursor.

In some embodiments of the present application, in S2, the co-precipitation reaction is carried out for 10 min-60 min.

In some embodiments of the present application, in S2, the co-precipitation reaction is carried out at a temperature of 20°C-80°C.

In some embodiments of the present application, in S2, a molar ratio of the precipitant to the metal salt is 1:1 to 3:1. Adjusting the amount of the precipitant can help improve conversion efficiency of metal ions and also enable more complete co-precipitation reaction.

In some embodiments of the present application, in S1, the aqueous solution of the metal salt has a concentration of 0.5 mol/L-2 mol/L.

In some embodiments of the present application, in S1, the aqueous solution of the precipitant has a concentration of 0.5 mol/L-2 mol/L.

In some embodiments of the present application, the aqueous solution of the metal salt is prepared by the following method: in an atmosphere of protective gas, dissolving the metal salt in water to form the aqueous solution of the metal salt, where the protective gas comprises nitrogen, inert gas, or a combination thereof.

In some embodiments of the present application, in S1, the metal salt comprises one or more selected from sulfates, nitrates, hydrochlorides, and acetates of metals.

In some embodiments of the present application, in S1, the water-soluble oxalate comprises one or more selected from lithium oxalate, sodium oxalate, potassium oxalate, and ammonium oxalate.

In some embodiments of the present application, in S1, the metal salt is a divalent metal salt.

In some embodiments of the present application, the metal salt comprises one or more selected from a divalent Mn salt, Fe salt, Ni salt, Co salt, Mg salt, Zn salt, Ca salt, Ti salt, V salt, and Cr salt.

In some embodiments of the present application, the metal salt comprises at least a divalent Mn salt.

In some embodiments of the present application, the metal salt comprises a divalent Mn salt or Fe salt or an optional salt of other metal M1, where M1 represents doping elements at manganese and iron sites, and optionally, the salt of other metal M1 comprises one or more selected from a divalent Ni salt, Co salt, Mg salt, Zn salt, Ca salt, Ti salt, V salt, and Cr salt. In this case, precursors of lithium manganese iron phosphate positive electrode active materials can be prepared.

In some embodiments of the present application, the metal salt comprises a divalent Mn salt, Ni salt or Co salt or an optional salt of other metal M2, where M2 represents doping elements at manganese, nickel and cobalt sites, and optionally, the salt of other metal M2 comprises one or more selected from a divalent Fe salt, Mg salt, Zn salt, Ca salt, Ti salt, V salt, and Cr salt. In this case, precursors of nickel cobalt lithium manganate positive electrode active materials can be prepared.

In some embodiments of the present application, the metal salt comprises a divalent Mn salt or Ni salt or an optional salt of other metal M3, where M3 represents doping elements at manganese and nickel sites, and optionally, the salt of other metal M3 comprises one or more selected from a divalent Fe salt, Co salt, Mg salt, Zn salt, Ca salt, Ti salt, V salt, and Cr salt. In this case, precursors of lithium rich manganese-based positive electrode active materials can be prepared.

In some embodiments of the present application, the aqueous solution of the metal salt further comprises a complexing agent. Adding the complexing agent to the aqueous solution of the metal salt can help to improve the purity of the obtained positive electrode active material precursor, reduce the content of impurities, and enable a small difference between the proportion of each metal ion in the obtained positive electrode active material precursor particles and the proportion of each metal ion in the raw materials, thereby achieving accurate control on the composition of the positive electrode active material precursor.

In some embodiments of the present application, the complexing agent comprises one or more selected from aminocarboxylates, hydroxycarboxylates, and organic phosphonates. Optionally, the complexing agent comprises one or more selected from ethylenediamine tetraacetate, gluconate, citrate, tartrate, metasilicate, tripolyphosphate, nitrilotriacetic acid, diethylenetriamine pentamethylene phosphonate, ethylenediamine tetramethylene phosphonate, and hydroxyethylenediamine diphosphate.

In some embodiments of the present application, a content of the complexing agent is ≤ 10 wt%, based on a total mass of the aqueous solution of the metal salt.

A second aspect of the present application provides a positive electrode active material precursor prepared by the method described in the first aspect of the present application, having a molecular formula of FeₓMn_{y}M1_{1-x-y}C₂O₄, NiₐCo_{b}Mn_{c}M2_{1-a-b-c}C₂O₄, or NiₚMn_{q}M3_{1-p-q}C₂O₄, where 0 < x < 1, 0 < y < 1, 0 ≤ 1-x-y < 1, and M1 represents doping elements at manganese and iron sites and optionally comprises one or more selected from Ni, Co, Mg, Zn, Ca, Ti, V and Cr; 0 < a < 1, 0 < b < 1, 0 < c < 1, 0 ≤ 1-a-b-c < 1, and M2 represents doping elements at manganese, nickel and cobalt sites and optionally comprises one or more selected from Fe, Mg, Zn, Ca, Ti, V and Cr; or 0 < p <1, 0 < q < 1, 0 ≤ 1-p-q < 1, and M3 represents doping elements at manganese and nickel sites and optionally comprises one or more selected from Fe, Co, Mg, Zn, Ca, Ti, V and Cr.

In some embodiments of the present application, a volume particle size Dv50 of the positive electrode active material precursor satisfies 0.3 µm ≤ Dv50 ≤ 3 µm.

In some embodiments of the present application, volume particle sizes Dv90 and Dv50 of the positive electrode active material precursor satisfy 1 < Dv90/Dv50 ≤ 1.5.

A third aspect of the present application provides a method for preparing a positive electrode active material, comprising the following steps: mixing the positive electrode active material precursor prepared by the method according to the first aspect of the present application or the positive electrode active material precursor according to the second aspect of the present application with a lithium source and/or a phosphorus source in a predetermined ratio, and then sintering to obtain the positive electrode active material.

A fourth aspect of the present application provides a positive electrode active material prepared by the method described in the third aspect of the present application.

A fifth aspect of the present application provides a secondary battery, comprising the positive electrode active material prepared by the method according to the third aspect of the present application or the positive electrode active material according to the fourth aspect of the present application.

The positive electrode active material precursor provided by the present application has the characteristics such as regular morphology, small particle size, narrow particle size distribution, single crystal phase, high purity, uniform element distribution, and high batch stability and consistency, which can improve the electrochemical performance of a positive electrode active material and a secondary battery.

### DESCRIPTION OF THE DRAWINGS

Fig. 1 shows a scanning electron microscope (SEM) image of a positive electrode active material precursor prepared in Example 3, where the magnification in Fig. 1(a) is 1000 times, and the magnification in Fig. 1(b) is 5000 times.
Fig. 2 shows a scanning electron microscope (SEM) image of a positive electrode active material precursor prepared in Comparative Example 2, where the magnification in Fig. 2(a) is 2000 times, and the magnification in Fig. 2(b) is 5000 times.
Fig. 3 shows first-cycle charge-discharge curves of button batteries prepared in Example 1, Example 2 and Comparative Example 1.

### DETAILED DESCRIPTION

Hereinafter, embodiments of a positive electrode active material precursor, a positive electrode active material, a preparation method, and a secondary battery of the present application will be specifically disclosed with proper reference to the accompanying drawings. However, unnecessary detailed explanations may be omitted. For example, detailed explanations of well-known matters and repeated explanations of actually identical structures are omitted. This will prevent the following explanations from becoming unnecessarily lengthy and help those skilled in the art to better understand them. In addition, the accompanying drawings and the following explanations are provided for those skilled in the art to fully understand the present application and are not intended to limit the subject matter of the claims.

A "range" disclosed in the present application is defined in the form of a lower limit and an upper limit. A given range is defined by selecting a lower limit and an upper limit, and the selected lower limit and upper limit define the boundaries of a particular range. The range defined in this way can include or exclude end values, and can be combined arbitrarily, that is, any lower limit can be combined with any upper limit to form a range. For example, if a range of 60-120 and a range of 80-110 are given for a specific parameter, it is understood that a range of 60-110 and a range of 80-120 are also expected. In addition, if minimum range values 1 and 2 are listed, and if maximum range values 3, 4 and 5 are listed, the following ranges can all be expected: 1-3, 1-4, 1-5, 2-3, 2-4 and 2-5. In the present application, unless otherwise specified, the numerical range "a-b" represents an abbreviation of any combination of real numbers between a and b, where both a and b are real numbers. For example, the numerical range "0-5" represents all real numbers "0-5" have been listed herein, and "0-5" is only an abbreviation of a combination of these values. In addition, when a parameter is expressed as an integer ≥ 2, it is equivalent to disclosing that the parameter is, for example, an integer 2, 3, 4, 5, 6, 7, 8, 9, 10, 11, or 12, etc.

Unless otherwise specified, all embodiments and optional embodiments of the present application may be combined to form new technical solutions, and such technical solutions should be considered to be included in the disclosure of the present application.

Unless otherwise specified, all technical features and optional technical features of the present application can be combined to form new technical solutions, and such technical solutions should be considered to be included in the disclosure of the present application.

Unless otherwise specified, all the steps of the present application can be carried out sequentially or randomly, but preferably carried out sequentially. For example, the method comprises steps S1 and S2, indicating that the method may comprise sequential steps S1 and S2 or sequential steps S2 and S1. For example, the mentioned method may further comprise step S3, indicating that step S3 may be added to the method in any order. For example, the method may comprise steps S1, S2 and S3, or steps S1, S3 and S2, or steps S3, S1 and S2.

Unless otherwise specified, the expressions "comprise" and "include" mentioned in the present application are open-ended or closed-ended. For example, the expression "comprise" and "include" may comprise or include other components that are not listed, or comprise or include only the listed components.

Unless otherwise specified, in the present application, the term "or" is inclusive. For example, the phrase "A or B" represents "A, B, or both A and B". More specifically, any of the following conditions satisfies the condition "A or B": A is true (or exists) and B is false (or does not exist); A is false (or does not exist) and B is true (or exists); or both A and B are true (or exist).

In the present application, the terms "a plurality of" and "more" (when used in "one or more") refer to two or more.

Co-precipitation is a common preparation process for positive electrode active material precursors. However, during the co-precipitation, sizes and morphologies of obtained crystals are difficult to control due to fast growth of crystal nuclei. Therefore, the obtained positive electrode active material precursors usually have defects such as large particle size (for example, the volume particle size Dv50 is usually 10 µm-40 µm), wide particle size distribution, irregular morphology, and poor batch stability and consistency, resulting in the need of long-time ball milling to reduce the particle size in subsequent preparation of the positive electrode active materials, which is both time-consuming and energy-consuming. Moreover, it is difficult to achieve uniform mixing of materials when the positive electrode active materials are prepared, which affects electrochemical performance of the positive electrode active materials and secondary batteries.

The inventors of the present application surprisingly found in research that, when an aqueous solution of a precipitant is mixed with an aqueous solution of a metal salt at a shear speed of 10000 r/min or more for reaction, a positive electrode active material precursor with regular morphology, small particle size, narrow particle size distribution, single crystal phase, high purity, uniform element distribution, and high batch stability and consistency can be obtained, thereby improving the electrochemical performance of positive electrode active materials and secondary batteries.

Specifically, a first aspect of embodiments of the present application provides a preparation method for a positive electrode active material precursor, comprising the following steps: S1, preparing an aqueous solution of a metal salt and an aqueous solution of a precipitant, where the precipitant comprises one or more selected from oxalic acid and a water-soluble oxalate; S2, mixing the aqueous solution of the precipitant and the aqueous solution of the metal salt at a shear speed of 10000 r/min or more for co-precipitation reaction; and S3, after the reaction is completed, obtaining the positive electrode active material precursor via washing and drying.

In S2, the co-precipitation reaction is carried out in a high-speed dispersion homogenizer.

At present, when a positive electrode active material precursor is prepared by co-precipitation in the prior art, stirring reaction is usually carried out in a conventional stirrer at a stirring speed of not more than 1200 r/min. In addition, the prior art generally believes that when the stirring speed reaches a value, any beneficial effect will not be produced on the growth of crystals, for example, the particle size will not be further decreased. However, the inventors of the present application unexpectedly discovered in research that, when the aqueous solution of the precipitant is mixed with the aqueous solution of the metal salt in a high-speed dispersion homogenizer at a shear speed of 10000 r/min or more for co-precipitation reaction, it can not only further improve production efficiency of the positive electrode active material precursor, but also can endow the positive electrode active material precursor with regular morphology, small particle size, narrow particle size distribution, single crystal phase, high purity, uniform element distribution, and high batch stability and consistency.

The high-speed dispersion homogenizer has a unique stator and rotor structure, which can produce ultra-strong shear force to quickly reduce material sizes and make materials finer and more evenly dispersed, and can also cyclically treat the materials to complete on-line dispersion, emulsification, homogenization and mixing processes. In contrast, even at high stirring speeds, the conventional stirrer is only effective in simple dispersion to fully dissolve reaction materials in a solvent, but does not have a shear and refinement function.

In the preparation method of the present application, the shear action of the high-speed dispersion homogenizer can instantly increase the initial concentration of the reaction system and enable direct co-precipitation reaction between the metal salt and the precipitant. Therefore, the preparation method of the present application can further increase the formation rate of crystal nuclei and enable crystal particles to nucleate rapidly and grow slowly, thereby effectively controlling the particle size and particle size distribution of the positive electrode active material precursor.

In the co-precipitation reaction process, reaction materials are sucked into a working cavity by means of high-speed rotation of the high-speed dispersion homogenizer, strong centrifugal force of the homogenizer throws the reaction materials radially into a reasonable narrow gap between a rotor and a stator, and generated positive active material precursor particles are fully dispersed and broken under combined effects of strong liquid phase shear, liquid layer friction, tear collision, and the like and can be shot out at a high speed through a stator slot. Subsequently, the flow direction is changed under the resistance of the reaction materials and a vessel wall. Meanwhile, upper and lower strong turbulent flows are formed under upper and lower axial suction force generated in a rotor area to greatly strengthen a mass transfer process. Therefore, after multiple cycles, positive electrode active material precursor particles with regular morphology, small particle size, narrow particle size distribution, single crystal phase, high purity, uniform element distribution, and high batch stability and consistency can be obtained, and a positive electrode active material prepared therefrom can have good batch stability and consistency and excellent electrochemical performance.

Moreover, the positive electrode active material precursor obtained by the preparation method according to the present application, as a raw material, can easily achieve uniform mixing of multiple elements in a subsequent solid-state ball milling process for preparing the positive electrode active material, thereby greatly reducing energy consumption and time of the ball milling process.

The preparation method according to the present application further has the advantages of simple process, high production efficiency, and easy scale-up for industrial production.

In the preparation method according to the present application, water (such as pure water, distilled water, or deionized water) is used as a solvent, so precipitation conversion efficiency of metal ions is high without the need for any organic solvent (such as alcohols or esters), and thus the process cost and pollution treatment burden in production wastewater can be reduced, low-cost and green production can be achieved, and high industrial value can also be achieved.

In S2, the shear speed is 10000 r/min or more. In some embodiments, in S2, the shear speed may be 10000 r/min to 28000 r/min, for example, 10000 r/min, 11000 r/min, 12000 r/min, 13000 r/min, 14000 r/min, 15000 r/min, 16000 r/min, 17000 r/min, 18000 r/min, 19000 r/min, 20000 r/min, 21000 r/min, 22000 r/min, 23000 r/min, 24000 r/min, 25000 r/min, 26000 r/min, 27000 r/min, 28000 r/min, or a range composed of any of the above values.

By controlling the shear speed, positive electrode active material precursors with different particle sizes can be obtained. Therefore, the preparation method according to the present application also helps to accurately control the particle size of the positive electrode active material precursor.

In S2, there is no special restriction on an adding order of the aqueous solution of the precipitant and the aqueous solution of the metal salt. For example, the both may be added to a reaction vessel at the same time, or the aqueous solution of the metal salt may be added first and then the aqueous solution of the precipitant may be added. Optionally, in S2, the aqueous solution of the precipitant is added to the aqueous solution of the metal salt at the shear speed of 10000 r/min or more and mixed for co-precipitation reaction. In this case, the shear effect of the high-speed dispersion homogenizer can instantly increase the initial concentration of the reaction system and enable direct co-precipitation reaction between the metal salt and the precipitant.

In some embodiments, in S2, the co-precipitation reaction may be carried out for 10 min-60 min.

In some embodiments, in S2, the co-precipitation reaction may be carried out at a temperature of 20°C-80°C.

In some embodiments, in S1, the aqueous solution of the metal salt may have a concentration of 0.5 mol/L-2 mol/L.

In some embodiments, in S1, the aqueous solution of the metal salt may be prepared by the following method: in an atmosphere of protective gas, dissolving the metal salt in water to form the aqueous solution of the metal salt, where the protective gas comprises nitrogen, inert gas, or a combination thereof.

In some embodiments, the metal salt may be a water-soluble metal salt known in the art for preparing positive electrode active material precursors. For example, it may comprise one or more selected from sulfates, nitrates, hydrochlorides, and acetates of metals.

In some embodiments, the metal salt may be a divalent metal salt.

The preparation method of the present application can prepare precursors of lithium manganese iron phosphate positive electrode active materials, precursors of nickel cobalt lithium manganate positive electrode active materials, and precursors of lithium rich manganese-based positive electrode active materials.

In some embodiments, the metal salt may comprise one or more selected from a divalent Mn salt, Fe salt, Ni salt, Co salt, Mg salt, Zn salt, Ca salt, Ti salt, V salt, and Cr salt.

In some embodiments, the metal salt may comprise at least a divalent Mn salt.

In some embodiments, the metal salt may comprise a divalent Mn salt or Fe salt or an optional salt of other metal M1, where M1 represents doping elements at manganese and iron sites, and optionally, the salt of other metal M1 comprises one or more selected from a divalent Ni salt, Co salt, Mg salt, Zn salt, Ca salt, Ti salt, V salt, and Cr salt. In this case, precursors of lithium manganese iron phosphate positive electrode active materials can be prepared.

In some embodiments, the metal salt may comprise a divalent Mn salt, Ni salt or Co salt or an optional salt of other metal M2, where M2 represents doping elements at manganese, nickel and cobalt sites, and optionally, the salt of other metal M2 comprises one or more selected from a divalent Fe salt, Mg salt, Zn salt, Ca salt, Ti salt, V salt, and Cr salt. In this case, precursors of nickel cobalt lithium manganate positive electrode active materials can be prepared.

In some embodiments, the metal salt may comprise a divalent Mn salt or Ni salt or an optional salt of other metal M3, where M3 represents doping elements at manganese and nickel sites, and optionally, the salt of other metal M3 comprises one or more selected from a divalent Fe salt, Co salt, Mg salt, Zn salt, Ca salt, Ti salt, V salt, and Cr salt. In this case, precursors of lithium rich manganese-based positive electrode active materials can be prepared.

In some embodiments, the aqueous solution of the precipitant may have a concentration of 0.5 mol/L-2 mol/L.

The precipitant comprises one or more selected from oxalic acid and a water-soluble oxalate. In some embodiments, optionally, the water-soluble oxalate comprises one or more selected from lithium oxalate, sodium oxalate, potassium oxalate, and ammonium oxalate.

In some embodiments, a molar ratio of the precipitant to the metal salt may be 1: 1 to 3:1. Adjusting the amount of the precipitant can help to improve conversion efficiency of metal ions, reduce a difference between precipitation rates of different metal ions in the reaction system, facilitate uniform co-precipitation of the metal ions, then accurately control the composition of the positive electrode active material precursor, and enable actual content of each metal ion in the obtained positive electrode active material precursor to reach a predetermined value. Adjusting the amount of the precipitant can also facilitate more complete co-precipitation reaction, thereby greatly reducing the content of metal ions in reaction waste liquid and reducing difficulties in post-treatment of the waste liquid and environmental pollution. Moreover, the adjustment also helps to improve the purity of the obtained positive electrode active material precursor and reduce the content of impurities.

In some embodiments, the aqueous solution of the metal salt may further comprise a complexing agent.

When the positive electrode active material precursor is prepared by co-precipitation, there are differences in solubility product constants of different metal ions, resulting in differences in precipitation rates of different metal ions, which makes it impossible to achieve uniform co-precipitation of the metal ions. Meanwhile, there is a significant difference between the proportion of each metal ion in the obtained positive electrode active material precursor particles and the proportion of each metal ion in the raw materials, which affects the performance and consistency of the product. The complexing agent may complex the metal ions to achieve the purpose of controlling free metal ions, so as to improve the precipitation conversion efficiency of the metal ions, reduce the differences in precipitation rates of different metal ions in the reaction system, achieve uniform co-precipitation of metal ions, then accurately control the composition of the positive electrode active material precursor, and enable the actual content of each metal ion in the obtained positive electrode active material precursor to reach a predetermined value. Therefore, adding the complexing agent to the aqueous solution of the metal salt can help to improve the purity of the obtained positive electrode active material precursor, reduce the content of impurities, and enable a small difference between the proportion of each metal ion in the obtained positive electrode active material precursor particles and the proportion of each metal ion in the raw materials, thereby achieving accurate control on the composition of the positive electrode active material precursor.

In some embodiments, the complexing agent may comprise one or more selected from aminocarboxylates, hydroxycarboxylates, and organic phosphonates. Optionally, the complexing agent comprises one or more selected from ethylenediamine tetraacetate, gluconate, citrate, tartrate, metasilicate, tripolyphosphate, nitrilotriacetic acid, diethylenetriamine pentamethylene phosphonate, ethylenediamine tetramethylene phosphonate, and hydroxyethylenediamine diphosphate. Optionally, the complexing agent comprises one or more selected from sodium ethylenediamine tetraacetate, sodium gluconate, sodium citrate, sodium tartrate, sodium metasilicate, sodium tripolyphosphate, nitrilotriacetic acid, sodium diethylenetriamine pentamethylene phosphonate, sodium ethylenediamine tetramethylene phosphonate, and sodium hydroxyethylene diphosphate.

In some embodiments, a content of the complexing agent may be ≤ 10 wt%, optionally 1 wt%-10 wt%, based on a total mass of the aqueous solution of the metal salt.

In some embodiments, in S3, the washing may comprise one or more of water washing and alcohol washing, and optionally comprise both water washing and alcohol washing. There is no special restriction on the number of times of water washing and alcohol washing in the present application, for example, 2-6 times. Optionally, ethanol is used for the alcohol washing.

There is no special restriction on the drying method in the present application, and adjustments may be made according to actual situations. In some embodiments, in S3, the drying process may be either a spray drying process or a vacuum drying process.

In some embodiments, in S3, the drying process may comprise the following steps: drying the washed material in a vacuum oven and then transferring the same to a tube furnace for further drying to obtain an anhydrous positive electrode active material precursor, thereby facilitating accurate adjustment of the proportion of each element in the subsequently prepared positive electrode active material.

Optionally, a drying temperature in the vacuum oven is 60°C-100°C, and a drying time in the vacuum oven is 6 h-24 h. Optionally, a drying temperature in the tube furnace is 200°C-300°C, and a drying time in the tube furnace is 2 h-8 h.

Optionally, the atmosphere inside the tube furnace is protective gas, which may comprise nitrogen, inert gas, or a combination thereof. Optionally, the inert gas is helium, argon, or a combination thereof.

In the preparation method for the positive electrode active material precursor according to the present application, all raw materials and instruments used can be directly purchased, unless otherwise specified.

A second aspect of the embodiments of the present application provides a positive electrode active material precursor prepared by the method described in the first aspect of the embodiments of the present application.

A molecular formula of the positive electrode active material precursor may be FeₓMn_{y}M1_{1-x-y}C₂O₄, NiₐCo_{b}Mn_{c}M2_{1-a-b-c}C₂O₄, or NiₚMn_{q}M3_{1-p-q}C₂O₄, where 0 < x < 1, 0 < y < 1, 0 ≤ 1-x-y < 1, and M1 represents doping elements at manganese and iron sites and optionally comprises one or more selected from Ni, Co, Mg, Zn, Ca, Ti, V and Cr; 0 < a < 1, 0 < b < 1, 0 < c < 1, 0 ≤ 1-a-b-c < 1, and M2 represents doping elements at manganese, nickel and cobalt sites and optionally comprises one or more selected from Fe, Mg, Zn, Ca, Ti, V and Cr; or 0 < p <1, 0 < q < 1, 0 ≤ 1-p-q < 1, and M3 represents doping elements at manganese and nickel sites and optionally comprises one or more selected from Fe, Co, Mg, Zn, Ca, Ti, V and Cr.

The positive electrode active material precursor according to the present application has the characteristics of regular morphology, small particle size, narrow particle size distribution, single crystal phase, high purity, uniform element distribution, and high batch stability and consistency, which can improve the electrochemical performance of a positive electrode active material and a secondary battery.

In some embodiments, a volume particle size Dv50 of the positive electrode active material precursor satisfies 0.3 µm ≤ Dv50 ≤ 3 µm.

In some embodiments, volume particle sizes Dv90 and Dv50 of the positive electrode active material precursor satisfy 1 < Dv90/Dv50 ≤ 1.5.

A third aspect of the embodiments of the present application provides a method for preparing a positive electrode active material, comprising the following steps: mixing the positive electrode active material precursor prepared by the method according to the first aspect of the embodiments of the present application or the positive electrode active material precursor according to the second aspect of the embodiments of the present application with a lithium source and/or a phosphorus source in a predetermined ratio, and then sintering to obtain the positive electrode active material.

In some embodiments, a molecular formula of the positive electrode active material precursor is FeₓMn_{y}M1_{1-x-y}C₂O₄, where 0 < x < 1, 0 < y < 1, 0 ≤ 1-x-y < 1, and M1 represents doping elements at manganese and iron sites and optionally comprises one or more selected from Ni, Co, Mg, Zn, Ca, Ti, V and Cr; and a preparation method for the positive electrode active material may comprise the following steps: mixing FeₓMn_{y}M1_{1-x-y}C₂O₄ with a lithium source, a phosphorus source, and an optional carbon source in a predetermined ratio, and then sintering to obtain the positive electrode active material, where a molecular formula of the positive electrode active material may be LiFeₓMn_{y}M1_{1-x-y}PO₄.

In some embodiments, a molecular formula of the positive electrode active material precursor is NiₐCo_{b}Mn_{c}M2_{1-a-b-c}C₂O₄, where 0 < a < 1, 0 < b < 1, 0 < c < 1, 0 ≤ 1-a-b-c < 1, and M2 represents doping elements at manganese, nickel and cobalt sites and optionally comprises one or more selected from Fe, Mg, Zn, Ca, Ti, V and Cr; and a preparation method for the positive electrode active material may comprise the following steps: mixing NiₐCo_{b}Mn_{c}M2_{1-a-b-c}C₂O₄ with a lithium source in a predetermined ratio, and then sintering to obtain the positive electrode active material, where a molecular formula of the positive electrode active material may be LiNiₐCo_{b}Mn_{c}M2_{1-a-b-c}O₂.

In some embodiments, a molecular formula of the positive electrode active material precursor is NiₚMn_{q}M3_{1-p-q}C₂O₄, where 0 < p <1, 0 < q < 1, 0 ≤ 1-p-q < 1, and M3 represents doping elements at manganese and nickel sites and optionally comprises one or more selected from Fe, Co, Mg, Zn, Ca, Ti, V and Cr; and a preparation method for the positive electrode active material may comprise the following steps: mixing NiₚMn_{q}M3_{1-p-q}C₂O₄ with a lithium source in a predetermined ratio, and then sintering to obtain the positive electrode active material, where a molecular formula of the positive electrode active material may be mLi₂MnO₃•(1-m)LiMO₂, 0 < m < 1, and M comprises one or more selected from Mn, Ni, Fe, Co, Mg, Zn, Ca, Ti, V and Cr.

The lithium source may be a lithium-containing compound known in the art for preparing positive electrode active materials. For example, the lithium source comprises Li₂CO₃, LiOH, or a combination thereof.

The phosphorus source may be a phosphorus-containing compound known in the art for preparing lithium manganese iron phosphate positive electrode active materials. For example, the phosphorus source comprises one or more of (NH₄)₂HPO₄, NH₄H₂PO₄, (NH₄)₃PO₄, and H₃PO₄.

The carbon source comprises one or more of organic carbon sources and inorganic carbon sources, and optionally comprises one or more selected from glucose, sucrose, starch, fructose, polyvinyl alcohol, polyethylene glycol, and citric acid.

A fourth aspect of the embodiments of the present application provides a positive electrode active material prepared by the method described in the third aspect of the embodiments of the present application. The positive electrode active material may be a lithium manganese iron phosphate positive electrode active material, a lithium nickel cobalt manganate positive electrode active material, or a lithium rich manganese-based positive electrode active material.

A fifth aspect of the embodiments of the present application provides a secondary battery, comprising the positive electrode active material prepared by the method described in the third aspect of the embodiments of the present application or the positive electrode active material described in the fourth aspect of the embodiments of the present application.

### Examples

The following examples more specifically describe the content disclosed in the present application, and these examples are only used for explanatory description, because various modifications and changes made within the scope of the content disclosed in the present application will be apparent to those skilled in the art. Unless otherwise stated, all parts, percentages and ratios described in the following examples are based on weight, all reagents used in the examples are commercially available or synthesized according to conventional methods and can be directly used without further treatment, and all instruments used in the examples are commercially available.

### Example 1

### S1. Preparation of an aqueous solution of a metal salt and an aqueous solution of a precipitant

Under the protection of nitrogen gas, ferrous sulfate and manganese sulfate were mixed with pure water in a reaction vessel in a Fe: Mn molar ratio of 4:6 to form an aqueous solution of a metal salt with a concentration of 0.5 mol/L, and then 5 wt% of sodium ethylenediaminetetraacetate was added as a complexing agent. An aqueous solution of a precipitant with a concentration of 0.75 mol/L was prepared for later use from oxalic acid as the precipitant and pure water.

### S2. Co-precipitation reaction

The speed of a high-speed dispersion homogenizer was manually adjusted to 12000 r/min, and then the aqueous solution of the precipitant was quickly added into the reaction vessel under high-speed dispersion and shear actions of the high-speed dispersion homogenizer and subjected to a shear reaction for 30 min to produce a suspension. The reaction temperature was room temperature (25°C), and a molar ratio of metal salt to oxalic acid was 1:1.5.

### S3. Drying

The obtained suspension was washed multiple times with deionized water and ethanol, then solid components were collected by centrifugation and dried in a vacuum oven at 80°C, and finally the dried sample was placed in a tube furnace and heated in an argon atmosphere at 200°C for 2 h to remove crystalline water, affording an anhydrous Mn_{0.6}Fe_{0.4}C₂O₄ precursor.

### Example 2

### S1. Preparation of an aqueous solution of a metal salt and an aqueous solution of a precipitant

Under the protection of nitrogen gas, ferrous sulfate and manganese sulfate were mixed with pure water in a reaction vessel in a Fe: Mn molar ratio of 4:6 to form an aqueous solution of a metal salt with a concentration of 0.5 mol/L, and then 3 wt% of sodium citrate was added as a complexing agent. An aqueous solution of a precipitant with a concentration of 1.5 mol/L was prepared for later use from oxalic acid as the precipitant and pure water.

### S2. Co-precipitation reaction

The speed of a high-speed dispersion homogenizer was manually adjusted to 28000 r/min, and then the aqueous solution of the precipitant was quickly added into the reaction vessel under high-speed dispersion and shear actions of the high-speed dispersion homogenizer and subjected to a shear reaction for 10 min to produce a suspension. The reaction temperature was room temperature (25°C), and a molar ratio of metal salt to oxalic acid was 1:3.

### S3. Drying

The obtained suspension was washed multiple times with deionized water and ethanol, then solid components were collected by centrifugation and dried in a vacuum oven at 80°C, and finally the dried sample was placed in a tube furnace and heated in an argon atmosphere at 200°C for 2 h to remove crystalline water, affording an anhydrous Mn_{0.6}Fe_{0.4}C₂O₄ precursor.

### Example 3

### S1. Preparation of an aqueous solution of a metal salt and an aqueous solution of a precipitant

Under the protection of nitrogen gas, ferrous sulfate and manganese sulfate were mixed with pure water in a reaction vessel in a Fe: Mn molar ratio of 3:7 to form an aqueous solution of a metal salt with a concentration of 0.5 mol/L, and then 10 wt% of sodium diethylenetriamine pentamethylene phosphonate was added as a complexing agent. An aqueous solution of a precipitant with a concentration of 0.5 mol/L was prepared for later use from sodium oxalate as the precipitant sodium and pure water.

### S2. Co-precipitation reaction

The speed of a high-speed dispersion homogenizer was manually adjusted to 10000 r/min, and then the aqueous solution of the precipitant was quickly added into the reaction vessel under high-speed dispersion and shear actions of the high-speed dispersion homogenizer and subjected to a shear reaction for 40 min to produce a suspension. The reaction temperature was room temperature (25°C), and a molar ratio of metal salt to sodium oxalate was 1:1.

### S3. Drying

The obtained suspension was washed multiple times with deionized water and ethanol, then solid components were collected by centrifugation and dried in a vacuum oven at 80°C, and finally the dried sample was placed in a tube furnace and heated in an argon atmosphere at 200°C for 2 h to remove crystalline water, affording an anhydrous Mn_{0.7}Fe_{0.3}C₂O₄ precursor.

### Example 4

### S1. Preparation of an aqueous solution of a metal salt and an aqueous solution of a precipitant

Under the protection of nitrogen gas, nickel sulfate and manganese sulfate were mixed with pure water in a reaction vessel in a Ni: Mn molar ratio of 3:7 to form an aqueous solution of a metal salt with a concentration of 0.5 mol/L, and then 5 wt% of ethylenediamine tetramethylene phosphate sodium was added as a complexing agent. An aqueous solution of a precipitant with a concentration of 1 mol/L was prepared for later use from oxalic acid as the precipitant and pure water.

### S2. Co-precipitation reaction

The speed of a high-speed dispersion homogenizer was manually adjusted to 15000 r/min, and then the aqueous solution of the precipitant was quickly added into the reaction vessel under high-speed dispersion and shear actions of the high-speed dispersion homogenizer and subjected to a shear reaction for 30 min to produce a suspension. The reaction temperature was room temperature (25°C), and a molar ratio of metal salt to oxalic acid was 1:2.

### S3. Drying

The obtained suspension was washed multiple times with deionized water and ethanol, then solid components were collected by centrifugation and dried in a vacuum oven at 80°C, and finally the dried sample was placed in a tube furnace and heated in an argon atmosphere at 200°C for 2 h to remove crystalline water, affording an anhydrous Mn_{0.7}Ni_{0.3}C₂O₄ precursor.

### Example 5

### S1. Preparation of an aqueous solution of a metal salt and an aqueous solution of a precipitant

Under the protection of nitrogen gas, nickel sulfate, cobalt sulfate and manganese sulfate were mixed with pure water in a reaction vessel in a Ni: Co: Mn molar ratio of 1:1:1 to form an aqueous solution of a metal salt with a concentration of 0.5 mol/L, and then 5 wt% of sodium gluconate was added as a complexing agent. An aqueous solution of a precipitant with a concentration of 0.5 mol/L was prepared for later use from ammonium oxalate as the precipitant and pure water.

### S2. Co-precipitation reaction

The speed of a high-speed dispersion homogenizer was manually adjusted to 20000 r/min, and then the aqueous solution of the precipitant was quickly added into the reaction vessel under high-speed dispersion and shear actions of the high-speed dispersion homogenizer and subjected to a shear reaction for 20 min to produce a suspension. The reaction temperature was room temperature (25°C), and a molar ratio of metal salt to ammonium oxalate was 1:1.

### S3. Drying

The obtained suspension was washed multiple times with deionized water and ethanol, then solid components were collected by centrifugation and dried in a vacuum oven at 80°C, and finally the dried sample was placed in a tube furnace and heated in an argon atmosphere at 200°C for 2 h to remove crystalline water, affording an anhydrous Ni_{0.33}Co_{0.33}Mn_{0.33}C₂O₄ precursor.

### Comparative Example 1

### S1. Preparation of an aqueous solution of a metal salt and an aqueous solution of a precipitant

Under the protection of nitrogen gas, ferrous sulfate and manganese sulfate were mixed with pure water in a reaction vessel in a Fe: Mn molar ratio of 4:6 to form an aqueous solution of a metal salt with a concentration of 0.5 mol/L, and then 3 wt% of sodium citrate was added as a complexing agent. An aqueous solution of a precipitant with a concentration of 1.5 mol/L was prepared for later use from oxalic acid as the precipitant and pure water.

### S2. Co-precipitation reaction

Under the stirring action of a magnetic stirrer, the aqueous solution of the precipitant was added to the reaction vessel and reacted while stirring for 60 min to produce a suspension. The reaction temperature was room temperature (25°C), the stirring speed was 800 r/min, and a molar ratio of metal salt to oxalic acid was 1:3.

### S3. Drying

The obtained suspension was washed multiple times with deionized water and ethanol, then solid components were collected by centrifugation and dried in a vacuum oven at 80°C, and finally the dried sample was placed in a tube furnace and heated in an argon atmosphere at 200°C for 2 h to remove crystalline water, affording an anhydrous Mn_{0.6}Fe_{0.4}C₂O₄ precursor.

### Comparative Example 2

### S1. Preparation of an aqueous solution of a metal salt and an aqueous solution of a precipitant

Under the protection of nitrogen gas, ferrous sulfate and manganese sulfate were mixed with pure water in a reaction vessel in a Fe: Mn molar ratio of 3:7 to form an aqueous solution of a metal salt with a concentration of 0.5 mol/L. An aqueous solution of a precipitant with a concentration of 0.5 mol/L was prepared for later use from sodium oxalate as the precipitant sodium and pure water.

### S2. Co-precipitation reaction

Under the stirring action of a magnetic stirrer, the aqueous solution of the precipitant was added to the reaction vessel and reacted while stirring for 60 min to produce a suspension. The reaction temperature was room temperature (25°C), the stirring speed was 500 r/min, and a molar ratio of metal salt to sodium oxalate was 1:1.

### S3. Drying

The obtained suspension was washed multiple times with deionized water and ethanol, then solid components were collected by centrifugation and dried in a vacuum oven at 80°C, and finally the dried sample was placed in a tube furnace and heated in an argon atmosphere at 200°C for 2 h to remove crystalline water, affording an anhydrous Mn_{0.7}Fe_{0.3}C₂O₄ precursor.

### Tests

### (1) Particle size test

Volume particle sizes of the oxalate precursor prepared above were tested with a Malvern Master Size 3000 laser particle size analyzer. Dv50 and Dv90 refer to corresponding particle sizes when a cumulative volume distribution percentage of a material reaches 50% and 90%, respectively. The test may be performed by referring to GB/T 19077-2016.

The test results are shown in Table 1.

### (2) Metal element content test

The content of each metal element in the oxalate precursor prepared above was tested by using a Plasma 3000 inductively coupled plasma emission spectrometer and an ICP-OES method, and molar ratios of the metal elements were calculated.

The test results are shown in Table 2.

### (3) Test on first cycle performance of a button battery

The prepared oxalate precursor (100 mmol), Li₂CO₃ (50 mmol), NH₄H₂PO₄ (100 mmol), and sucrose (15 mmol) were put into a ball milling tank, added with a small amount of ethanol and water as a solvent, and milled at a speed of 500 r/min for 8 h to produce a slurry; and the obtained slurry was transferred to a spray drying device for spray drying granulation to produce powders, where the drying temperature was set at 210°C. The obtained powders were sintered in a muffle furnace at 400°C in an air atmosphere for 5 h and naturally cooled to room temperature to give a pre-sintered material; the obtained pre-sintered material was put into a ball milling tank, added with a small amount of ethanol and water as a solvent, and milled at a speed of 800 r/min for 4 h to give a slurry; the obtained slurry was transferred to a spray drying device for spray drying granulation to produce pre-sintered material powders, where the drying temperature was set at 210°C; and the obtained pre-sintered material powders were sintered in a muffle furnace at 700°C in a nitrogen atmosphere for 10 h, naturally cooled to room temperature, and crushed by gas flow to produce a lithium manganese iron phosphate positive electrode active material.

The prepared lithium manganese iron phosphate positive electrode active material, polyvinylidene fluoride (PVDF) as a binder, and acetylene black as a conductive agent were added in a weight ratio of 90:5:5 to N-methylpyrrolidone (NMP) and stirred in a drying room to produce a slurry. An aluminum foil was coated with the slurry, dried, and cold-pressed to form a positive electrode plate.

A lithium plate as a negative electrode, a solution of 1 mol/L LiPF₆ in ethylene carbonate (EC), diethyl carbonate (DEC) and dimethyl carbonate (DMC) at a volume ratio of 1:1:1 as an electrolytic solution, and the prepared positive electrode plate were assembled in a button battery box to prepare a button battery.

The button battery was charged at a constant current rate of 0.1 C to 4.3 V in a constant temperature environment of 25°C and then charged at the constant voltage of 4.3 V until the current was less than or equal to 0.05 mA, and the charge capacity at this time was an initial charge capacity, denoted as C0. The button battery was stood for 2 min and discharged at a constant current rate of 0.1 C to 2.0 V, and the discharge capacity at this time was an initial discharge capacity, denoted as D0.

First coulombic efficiency of the button battery (%) = (D0/C0) × 100%. Initial gram capacity of the button battery (mAh/g) = D0/m, where m represents a mass of the lithium manganese iron phosphate positive electrode active material.

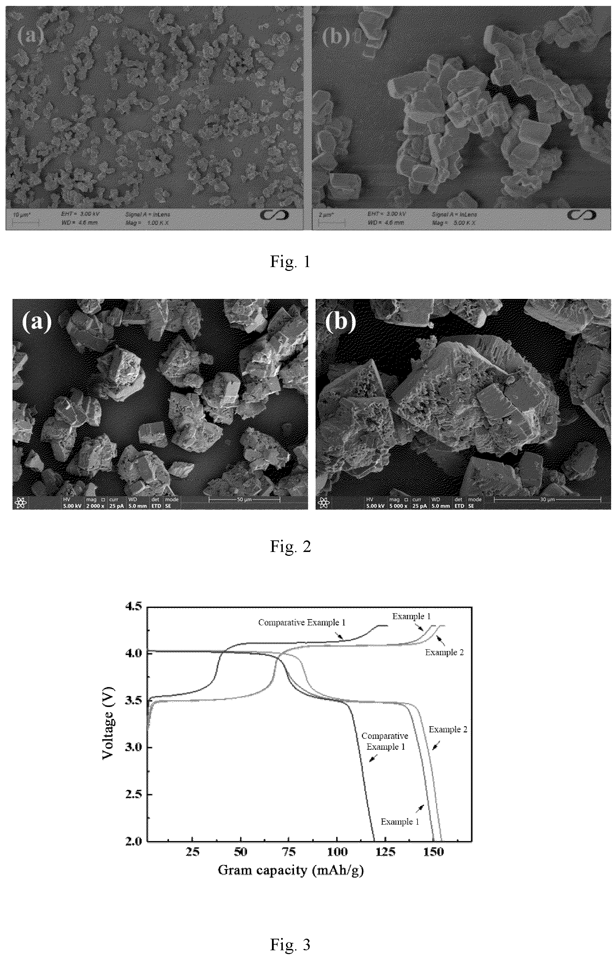

The test results are shown in Table 3 and Fig. 3.

**Table 1**

| Number | D50 | D90 | D90/D50 |
|---|---|---|---|
| Example 1 | 1.5 µm | 2.1 µm | 1.40 |
| Example 2 | 0.3 µm | 0.4 µm | 1.33 |
| Example 3 | 1.7 µm | 2.5 µm | 1.47 |
| Example 4 | 1.2 µm | 1.7 µm | 1.41 |
| Example 5 | 0.8 µm | 1.1 µm | 1.37 |
| Comparative Example 1 | 29.5 µm | 50.7 µm | 1.72 |
| Comparative Example 2 | 35.8 µm | 64.7 µm | 1.81 |

**Table 2**

| Number | Precursor | Mn: Fe molar ratio | | Mn: Ni molar ratio | | Ni: Co: Mn molar ratio | |
|---|---|---|---|---|---|---|---|
| | | Theoretica 1 value | Test value | Theoretica 1 value | Test value | Theoretica 1 value | Test value |
| Example 1 | Mn_{0.6}Fe_{0.4}C₂O₄ | 1.500:1 | 1.513: 1 | / | / | / | / |
| Example 2 | Mn_{0.6}Fe_{0.4}C₂O₄ | 1.500:1 | 1.519: 1 | / | / | / | / |
| Example 3 | Mn_{0.7}Fe_{0.3}C₂O₄ | 2.333:1 | 2.335: 1 | / | / | / | / |
| Example 4 | Mn_{0.7}Ni_{0.3}C₂O₄ | / | / | 2.333:1 | 2.334: 1 | / | / |
| Example 5 | Ni_{0.33}Co_{0.33}Mn_{0.33}C₂ O₄ | / | / | / | / | 1:1:1 | 1.001:0.999: 1 |
| Comparativ e Example 1 | Mn_{0.6}Fe_{0.4}C₂O₄ | 1.500:1 | 1.391: 1 | / | / | / | / |
| Comparativ e Example 2 | Mn_{0.7}Fe_{0.3}C₂O₄ | 2.333:1 | 1.813: 1 | / | / | / | / |

**Table 3**

| Number | Initial coulombic efficiency | Initial capacity per gram (mAh/g) |
|---|---|---|
| Example 1 | 98% | 150.4 |
| Example 2 | 99% | 154.6 |
| Example 3 | 97% | 149.5 |
| Comparative Example 1 | 95% | 119.5 |
| Comparative Example 2 | 92% | 115.3 |

Fig. 1 shows a scanning electron microscope (SEM) image of the positive electrode active material precursor prepared in Example 3, where the magnification in Fig. 1(a) is 1000 times, and the magnification in Fig. 1(b) is 5000 times. Fig. 2 shows a scanning electron microscope (SEM) image of the positive electrode active material precursor prepared in Comparative Example 2, where the magnification in Fig. 2(a) is 2000 times, and the magnification in Fig. 2(b) is 5000 times.

According to the test results in Tables 1 and 2 and Figs. 1 and 2, it can be seen that the positive electrode active material precursor prepared by the preparation method provided in the present application has the characteristics of regular morphology, small particle size, narrow particle size distribution, and uniform element distribution. According to the test results of Examples 1-5, the higher the speed (namely, shear speed) of the high-speed dispersion homogenizer, the smaller the particle size and the narrower the particle size distribution of the obtained positive electrode active material precursor.

According to the test results of Example 3 and Comparative Example 2, adding a complexing agent to the aqueous solution of the metal salt can accurately control the composition of the positive electrode active material precursor and enable the actual content of each metal ion in the obtained positive electrode active material precursor to reach a predetermined value.

According to the test results of Example 1, Example 2 and Comparative Example 1, when a complexing agent is added to the aqueous solution of the metal salt, the preparation method provided in the present application can accurately control the composition of the positive electrode active material precursor and enable the actual content of each metal ion in the obtained positive electrode active material precursor to be closer to a predetermined value.

Fig. 3 shows first-cycle charge-discharge curves of the button batteries prepared in Example 1, Example 2 and Comparative Example 1. According to the test results in Table 3 and Fig. 3, it can be seen that the manganese iron lithium phosphate positive electrode active material prepared from the positive electrode active material precursor according to the present application has higher gram capacity and first coulombic efficiency, which can better improve the electrochemical performance of the secondary battery.

It should be noted that the present application is not limited to the foregoing embodiments. The foregoing embodiments are only examples, and all embodiments within the scope of the technical solution of the present application that have substantially the same composition and effects as the technical concept fall within the technical scope of the present application. Moreover, various variations that can be conceived by those skilled in the art and other embodiments constituted by combining some elements of the embodiments without departing from the scope of the main concept of the present application are included in the scope of the present application.

## Claims

1. A method for preparing a positive electrode active material precursor, comprising the following steps: S1, preparing an aqueous solution of a metal salt and an aqueous solution of a precipitant, wherein the precipitant comprises one or more selected from oxalic acid and a water-soluble oxalate; S2, mixing the aqueous solution of the precipitant and the aqueous solution of the metal salt at a shear speed of 10000 r/min or more for co-precipitation reaction; and S3, after the reaction is completed, obtaining the positive electrode active material precursor via washing and drying.

2. The method according to claim 1, wherein in S2, the co-precipitation reaction is carried out in a high-speed dispersion homogenizer.

3. The method according to claim 1 or 2, wherein
in S2, the shear speed is 10000 r/min-28000 r/min; and/or
in S2, the co-precipitation reaction is carried for 10 min-60 min; and/or
in S2, the co-precipitation reaction is carried out at a temperature of 20°C-80°C.

4. The method according to any one of claims 1-3, wherein in S2, a molar ratio of the precipitant to the metal salt is 1: 1 to 3:1.

5. The method according to any one of claims 1-4, wherein
in S1, the aqueous solution of the metal salt has a concentration of 0.5 mol/L-2 mol/L; and/or
in S1, the aqueous solution of the precipitant has a concentration of 0.5 mol/L-2 mol/L.

6. The method according to any one of claims 1-5, wherein the aqueous solution of the metal salt is prepared by the following method: in an atmosphere of protective gas, dissolving the metal salt in water to form the aqueous solution of the metal salt, wherein the protective gas comprises nitrogen, inert gas, or a combination thereof.

7. The method according to any one of claims 1-6, wherein
in S1, the metal salt comprises one or more selected from sulfates, nitrates, hydrochlorides, and acetates of metals; and/or
in S1, the water-soluble oxalate comprises one or more selected from lithium oxalate, sodium oxalate, potassium oxalate, and ammonium oxalate.

8. The method according to any one of claims 1-7, wherein in S1, the metal salt is a divalent metal salt.

9. The method according to any one of claims 1-8, wherein the metal salt comprises one or more selected from a divalent Mn salt, Fe salt, Ni salt, Co salt, Mg salt, Zn salt, Ca salt, Ti salt, V salt, and Cr salt.

10. The method according to any one of claims 1-9, wherein the metal salt comprises at least a divalent Mn salt.

11. The method according to any one of claims 1-10, wherein
the metal salt comprises a divalent Mn salt or Fe salt or an optional salt of other metal M1, wherein M1 represents doping elements at manganese and iron sites, and optionally, the salt of other metal M1 comprises one or more selected from a divalent Ni salt, Co salt, Mg salt, Zn salt, Ca salt, Ti salt, V salt, and Cr salt; or
the metal salt comprises a divalent Mn salt, Ni salt or Co salt or an optional salt of other metal M2, wherein M2 represents doping elements at manganese, nickel and cobalt sites, and optionally, the salt of other metal M2 comprises one or more selected from a divalent Fe salt, Mg salt, Zn salt, Ca salt, Ti salt, V salt, and Cr salt; or
the metal salt comprises a divalent Mn salt or Ni salt or an optional salt of other metal M3, wherein M3 represents doping elements at manganese and nickel sites, and optionally, the salt of other metal M3 comprises one or more selected from a divalent Fe salt, Co salt, Mg salt, Zn salt, Ca salt, Ti salt, V salt, and Cr salt.

12. The method according to any one of claims 1-11, wherein the aqueous solution of the metal salt further comprises a complexing agent, and optionally, the complexing agent comprises one or more selected from aminocarboxylates, hydroxycarboxylates, and organic phosphonates.

13. The method according to claim 12, wherein
the complexing agent comprises one or more selected from ethylenediamine tetraacetate, gluconate, citrate, tartrate, metasilicate, tripolyphosphate, nitrilotriacetic acid, diethylenetriamine pentamethylene phosphonate, ethylenediamine tetramethylene phosphonate, and hydroxyethylenediamine diphosphate; and/or
a content of the complexing agent is ≤ 10 wt%, based on a total mass of the aqueous solution of the metal salt.

14. A positive electrode active material precursor prepared by the method according to any one of claims 1-13, wherein its molecular formula is FeₓMn_{y}M1_{1-x-y}C₂O₄, NiₐCo_{b}Mn_{c}M2_{1-a-b-c}C₂O₄, or NiₚMn_{q}M3_{1-p-q}C₂O₄, wherein 0 < x < 1, 0 < y < 1, 0 ≤ 1-x-y < 1, and M1 represents doping elements at manganese and iron sites and optionally comprises one or more selected from Ni, Co, Mg, Zn, Ca, Ti, V and Cr; 0 < a < 1, 0 < b < 1, 0 < c < 1, 0 ≤ 1-a-b-c < 1, and M2 represents doping elements at manganese, nickel and cobalt sites and optionally comprises one or more selected from Fe, Mg, Zn, Ca, Ti, V and Cr; or 0 < p <1, 0 < q < 1, 0 ≤ 1-p-q < 1, and M3 represents doping elements at manganese and nickel sites and optionally comprises one or more selected from Fe, Co, Mg, Zn, Ca, Ti, V and Cr.

15. The positive electrode active material precursor according to claim 14, wherein
a volume particle size Dv50 of the positive electrode active material precursor satisfies 0.3 µm ≤ Dv50 ≤ 3 µm; and/or
volume particle sizes Dv90 and Dv50 of the positive electrode active material precursor satisfy 1 < Dv90/Dv50 ≤ 1.5.

16. A method for preparing a positive electrode active material, comprising the following steps:
mixing the positive electrode active material precursor prepared by the method according to any one of claims 1-13 or the positive electrode active material precursor according to any one of claims 14 and 15 with a lithium source and/or a phosphorus source in a predetermined ratio, and then sintering to obtain the positive electrode active material.

17. A positive electrode active material prepared by the method according to claim 16.

18. A secondary battery, comprising the positive electrode active material prepared by the preparation method according to claim 16 or the positive electrode active material according to claim 17.
